# FASCICULE DE BREVET EUROPEEN

(11) **EP 0 756 078 B1**
(45) Date de publication et mention de la délivrance du brevet: **01.03.2000**
(21) Numéro de dépôt: 96401651.3
(22) Date de dépôt: 24.07.1996
(51) Int. Cl.: F02K 1/70

(54) **Turboréacteur à double flux à portes d'inversion de poussée**
Zweikreistriebwerk mit Schubumkehrklappen
Bypass turbofan engine with thrust reverse deflector doors

(30) Priorité: 26.07.1995 FR 9509082
(43) Date de publication de la demande: 29.01.1997
(73) Titulaire: AEROSPATIALE Société Nationale Industrielle, 75781 Paris Cédex 16 (FR)
(72) Inventeur: Porte, Alain, 31770 Colomiers (FR)
(74) Mandataire: Dubois-Chabert, Guy

(56) Documents cités:
- DE-C- 4 039 810
- US-A- 4 216 923

## Description

### Domaine technique

L'invention concerne un turboréacteur à double flux équipé de portes d'inversion de poussée dont la position inactive se caractérise par une implantation telle que ces portes ne sont pas soumises au flux secondaire issu de la soufflante du réacteur.

Bien que l'invention puisse être utilisée sur tous les turboréacteurs à double flux assurant la propulsion des aéronefs, elle s'applique avantageusement aux turboréacteurs dits "à flux séparés" ou "à nacelle courte", dans lesquels le moteur central du turboréacteur se prolonge vers l'arrière au-delà de l'extrémité arrière de la nacelle qui délimite extérieurement le canal annulaire dans lequel s'écoule le flux secondaire issu de la soufflante.

### Etat de la technique

De façon bien connue, un turboréacteur à double flux comprend un moteur central comparable à un turboréacteur à simple flux, délivrant un flux de gaz chaud, appelé "flux primaire". Une soufflante, généralement placée à l'avant de ce moteur central, est entraînée mécaniquement par la turbine basse pression du moteur central. Le flux d'air froid issu de la soufflante, appelé "flux secondaire", est canalisé par un canal annulaire formé entre l'enveloppe extérieure du moteur central et l'enveloppe intérieure d'une nacelle placée coaxialement autour de ce moteur central. Ce canal annulaire est aussi appelé "canal de soufflante".

Il existe deux types de turboréacteurs à double flux selon la configuration de leur partie arrière.

Ainsi, il existe des turboréacteurs dits "à flux séparés" ou "à nacelle courte", dans lesquels la tuyère formant la partie arrière du moteur central se prolonge au-delà de l'extrémité arrière de la nacelle. Dans ce cas, le flux secondaire issu du canal de soufflante reste séparé du flux primaire sortant du moteur central, à l'arrière du turboréacteur.

Il existe également des turboréacteurs dits "à flux mélangés" ou "à nacelle longue", dans lesquels la nacelle se prolonge vers l'arrière au-delà de l'extrémité arrière du moteur central. Dans ce cas, les flux primaire et secondaire se mélangent avant de sortir du turboréacteur.

Comme la plupart des moteurs d'avions, les turboréacteurs à double flux sont équipés de moyens d'inversion de poussée prévus pour être actionnés à l'atterrissage, après que les roues de l'avion aient touché le sol, afin d'ajouter au freinage mécanique assuré par les freins associés à ces roues, un freinage aérodynamique dû à une inversion du sens de la poussée des turboréacteurs.

Les moyens d'inversion de poussée susceptibles d'être utilisés sur les turboréacteurs à double flux sont actuellement de trois types.

Un premier type d'inverseurs de poussée existant concerne les inverseurs à portes pivotantes. Des portes, généralement au nombre de quatre, sont découpées dans toute l'épaisseur de la nacelle, dans la partie de celle-ci située autour du compresseur haute pression du moteur central. Ces portes peuvent pivoter entre une position inactive de vol, dans laquelle elles assurent la continuité de la nacelle, et une position active, dans laquelle elles sont orientées selon une direction sensiblement radiale par rapport à l'axe longitudinal du réacteur. Dans cette position active, les portes d'inversion de poussée obturent la majeure partie du canal de soufflante et dévient le flux secondaire radialement vers l'extérieur, au travers des ouvertures formées dans la nacelle à l'avant des portes, du fait du pivotement de celles-ci. Plus précisément, l'orientation et la forme données aux portes d'inversion de poussée leur permettent, dans cette position active, de dévier vers l'avant le flux secondaire issu de la soufflante lorsqu'il est éjecté à l'extérieur de la nacelle. L'effet d'inversion de poussée est ainsi obtenu.

Cette première technique d'inversion de poussée présente de nombreux avantages, parmi lesquels on citera notamment une grande simplicité, un bon comportement dans le temps et la possibilité de réaliser les portes dans des matériaux légers et peu coûteux, du fait qu'elles ne sont soumises qu'au flux secondaire froid issu de la soufflante.

Cette technique présente également quelques inconvénients qui découlent, pour l'essentiel, du fait que les portes sont découpées directement dans l'épaisseur de la nacelle et forment ainsi une partie de l'enveloppe intérieure de celle-ci, lorsqu'elles occupent leur position inactive. Ces inconvénients concernent notamment l'existence de fuites à la jonction entre les portes et la nacelle, l'existence de perturbations aérodynamiques dans le canal de soufflante par suite d'un alignement imparfait des portes dans leur position inactive, l'existence de pertes acoustiques due à l'impossibilité de réaliser en totalité la surface intérieure des portes dans un matériau traité à cet effet, et l'action défavorable du flux secondaire sous pression, qui tend naturellement à ouvrir ces portes lors du fonctionnement du turboréacteur.

Un deuxième type connu d'inverseurs de poussée concerne les inverseurs à grilles. Des grilles sont intégrées dans l'épaisseur de la nacelle, sur toute la circonférence de celle-ci. Dans la position inactive de l'inverseur de poussée, ces grilles sont recouvertes en totalité vers l'extérieur du turboréacteur par une enveloppe extérieure appartenant à une partie coulissante de la nacelle. Cette partie arrière coulissante comporte également une enveloppe intérieure qui masque vers l'intérieur la partie arrière des grilles. L'obturation interne de la partie avant des grilles est assurée quant à elle par une multitude de portes (par exemple 16) montées sur des bielles articulées sur l'enveloppe extérieure du moteur central.

Le passage de ces inverseurs à grilles dans leur position active est assuré par le déplacement vers l'arrière de la partie arrière coulissante de la nacelle et par le basculement vers l'arrière des portes. Celles-ci viennent alors obturer le canal de soufflante, à l'arrière des grilles, de telle sorte que le flux secondaire issu de la soufflante est éjecté radialement vers l'extérieur au travers des grilles. Du fait de leur structure particulière, ces dernières agissent comme des déflecteurs qui orientent vers l'avant le flux secondaire ainsi éjecté du canal de soufflante. L'effet d'inversion de poussée est ainsi assuré.

Grâce au grand nombre de portes qui assurent une obturation presque complète du canal de soufflante et grâce à l'interchangeabilité des grilles qui permet d'ajuster pratiquement à la demande la direction du jet secondaire expulsé à l'extérieur de la nacelle, cette technique procure des performances légèrement supérieures à la précédente.

En revanche, la description qui vient d'en être faite montre que les inverseurs à grilles sont des mécanismes sensiblement plus complexes que les inverseurs à portes pivotantes. Par conséquent, ils sont sensiblement plus lourds, plus chers et moins fiables que ces derniers. De plus, du fait que les portes sont articulées sur l'enveloppe extérieure du moteur central par des biellettes qui traversent le canal de soufflante lorsque le réacteur est en fonctionnement normal, l'effort de poussée produit par celui-ci s'en trouve diminué.

Les inverseurs à grilles présentent également tous les inconvénients déjà indiqués à propos des inverseurs à portes pivotantes, qui découlent du fait que dans leur position inactive, certaines parties de ces inverseurs sont intégrées à l'enveloppe intérieure de la nacelle. On observera simplement que ces inconvénients sont légèrement atténués ici, du fait que la surface de l'enveloppe intérieure de la nacelle faisant partie de l'inverseur est moindre que dans le cas des inverseurs à portes pivotantes.

Le troisième type connu d'inverseurs de poussée concerne les inverseurs à coquille. A la différence des deux types d'inverseurs précédents, qui sont utilisables aussi bien sur les turboréacteurs à flux séparés que sur les turboréacteurs à flux mélangé, les inverseurs à coquille ne sont utilisables que sur les turboréacteurs à flux mélangés. Sur les turboréacteurs équipés de tels inverseurs, la partie arrière de la nacelle forme deux demi-coquilles qui sont aptes à pivoter dans un plan horizontal pour venir en appui l'une contre l'autre à l'arrière du moteur central et du canal de soufflante, à la manière d'un parachute, dans la position active de l'inverseur.

Cette troisième technique présente des avantages de simplicité et de fiabilité analogues à ceux des inverseurs à portes pivotantes. De plus, elle est la plus efficace des trois puisque l'effet d'inversion de poussée concerne aussi bien le flux secondaire que le flux primaire. Accessoirement, il est à noter que la réalisation de la partie arrière de la nacelle sous la forme de deux demi-coquilles autorise, lorsque cela est nécessaire, un réglage de la section de sortie de cette nacelle.

En contrepartie du gain d'efficacité assuré par l'inversion simultanée des flux primaire et secondaire, la température élevée du flux primaire issu du moteur central impose l'utilisation de matériaux lourds et coûteux pour la fabrication des deux demi-coquilles. De plus, le principe même de cette technique la rend inutilisable sur les turboréacteurs à flux séparés.

En outre, du fait que les deux demi-coquilles viennent se placer totalement à l'arrière du turboréacteur dans leur position active, l'inversion de poussée se produit dans une zone habituellement située sous l'avant de la voilure de l'avion, lorsque le turboréacteur est suspendu à la voilure. Le jet secondaire infléchi par les demi-coquilles déployées a donc tendance à soulever l'avion qui roule alors sur la piste, ce qui réduit d'autant l'efficacité des freins mécaniques associés aux roues. Le freinage total de l'avion n'est donc pas réellement supérieur à celui procuré par les deux autres techniques connues, malgré l'efficacité plus grande de l'inverseur à coquille considéré isolément.

Enfin, il est essentiel de noter que cette troisième technique connue présente elle-aussi tous les inconvénients indiqués précédemment qui découlent du fait que l'enveloppe intérieure de la nacelle est formée en partie sur les structures mobiles de l'inverseur.

### Exposé de l'invention

L'invention a principalement pour objet un turboréacteur à double flux équipé d'un inverseur de poussée d'un type nouveau, ne présentant pas les inconvénients des inverseurs connus, et dont la conception originale permet notamment de placer les parties mobiles de l'inverseur totalement en dehors de l'enveloppe intérieure de la nacelle et sans aucun contact avec le flux secondaire issu de la soufflante, dans l'état inactif de l'inverseur.

L'invention a aussi pour objet un turboréacteur à double flux équipé d'un inverseur de poussée d'un type nouveau prévu pour être implanté de préférence sur un turboréacteur à flux séparés ou à nacelle courte, mais dont l'implantation peut toutefois être aussi envisagée sur un turboréacteur à flux mélangés ou à nacelle longue.

Conformément à l'invention, ces résultats sont obtenus au moyen d'un turboréacteur à double flux, comprenant :
- un moteur central, d'axe longitudinal donné, comportant une enveloppe extérieure ;
- une nacelle placée coaxialement autour du moteur et comportant une enveloppe intérieure et une enveloppe extérieure ;
- une soufflante entraînée par le moteur et montée dans un canal annulaire formé entre l'enveloppe extérieure du moteur et l'enveloppe intérieure de la nacelle ;
   -- au moins deux portes d'inversion de poussée, aptes à occuper une position inactive, dans laquelle les portes sont escamotées dans la nacelle et une position active, dans laquelle les portes infléchissent vers l'extérieur de la nacelle et vers l'avant au moins une partie d'un flux d'air circulant dans le canal annulaire ; et
   -- des moyens de commande de déplacement des portes entre leur position inactive et leur position active ;
- caractérisé par le fait que :
   -- dans leur position inactive, les portes sont reçues dans des logements formés sur l'enveloppe extérieure de la nacelle et situés en totalité à l'extérieur de l'enveloppe intérieure de la nacelle ; et
   -- dans leur position active, les portes sont placées au-delà de l'extrémité arrière de la nacelle.

Du fait que les portes d'inversion de poussée ne sont pas soumises au flux secondaire issu de la soufflante, tout risque d'ouverture de ces portes en vol dû à la surpression régnant dans le canal secondaire est supprimé. De plus, l'enveloppe intérieure de la nacelle peut être réalisée sans discontinuité, ce qui permet de supprimer les fuites et les perturbations aérodynamiques internes inhérentes à toutes les techniques d'inversion de poussée existantes. De plus, les caractéristiques acoustiques du réacteur peuvent être améliorées, du fait que l'ensemble de l'enveloppe intérieure de la nacelle peut être réalisé en un matériau choisi pour ses propriétés d'atténuation acoustique.

Dans une forme de réalisation préférentielle de l'invention, qui concerne essentiellement les turboréacteurs à flux séparés ou à nacelle courte, chacune des portes comprend dans le bord aval, les portes étant en position inactive, une partie en arc de cercle, qui épouse sensiblement l'enveloppe extérieure du moteur, dans la position active de la porte.

Avantageusement, chacune des portes comprend alors un déflecteur intérieur placé dans le logement quand la porte est en position inactive. Ce déflecteur intérieur est situé sur le bord aval en arc de cercle et orienté vers l'avant dans la position active de la porte.

Par ailleurs, chacune des portes comprend aussi, de préférence, un déflecteur extérieur placé dans le logement quand la porte est en position inactive. Ce déflecteur extérieur est situé sur bord de la porte et orienté vers l'avant dans la position active de la porte.

Dans la forme de réalisation préférentielle de l'invention, le turboréacteur comprend deux portes d'inversion de poussée reçues dans deux logements situés sur les côtés du réacteur et s'étendant sur la majeure partie de la demi-circonférence de la nacelle. Le déplacement des portes entre leur position inactive et leur position active s'effectue alors selon une direction sensiblement horizontale pendant l'atterrissage.

Il est important d'observer que la cinématique du déplacement des portes entre leur position inactive et leur position active peut être quelconque sans sortir du cadre de l'invention. On indiquera simplement à titre d'exemple trois types de cinématique possible, matérialisés par des moyens de commande de déplacement des portes différents.

Une première cinématique, qui correspond à deux mouvements de pivotement successifs en sens opposé des portes par rapport à la nacelle, est obtenue grâce à des moyens de commande de déplacement comprenant des moyens de liaison pivotante reliant chaque porte à la nacelle et au moins un vérin d'actionnement interposé entre la porte et la nacelle.

Une deuxième cinématique, dans laquelle le déplacement des portes combine un mouvement de translation et un mouvement de rotation, est matérialisée par des moyens de commande de déplacement des portes qui comprennent des moyens de liaison en translation et en pivotement reliant chaque porte à la nacelle ainsi qu'au moins un vérin d'actionnement interposé entre la porte et la nacelle.

La troisième cinématique correspond à une trajectoire plus complexe, matérialisée par des moyens de commande de déplacement des portes qui comprennent des moyens de liaison à bielles articulées reliant chaque porte à la nacelle et au moins un vérin d'actionnement interposé entre la porte et la nacelle.

### Brève description des dessins

On décrira à présent, à titre d'exemple non limitatif, une forme de réalisation préférentielle d'un turboréacteur à double flux conforme à l'invention, en se référant aux dessins annexés, dans lesquels :
- la figure 1 est une vue de dessus, en coupe longitudinale partielle, représentant de façon schématique un turboréacteur à double flux conforme à l'invention, dans la position inactive des portes d'inversion de poussée ;
- la figure 2 est une vue comparable à la figure 1 illustrant le turboréacteur dans la position active des portes d'inversion de poussée ;
- la figure 3 est une vue de côté, à plus grande échelle, représentant le turboréacteur des figures 1 et 2 suspendu à la voilure d'un avion, dans la position active des portes d'inversion de poussée ;
- la figure 4 est une vue en perspective du turboréacteur des figures 1 à 3 représentant celui-ci dans la position inactive des portes d'inversion de poussée ;
- la figure 5 est une vue en perspective comparable à la figure 4 représentant le turboréacteur dans la position active des portes d'inversion de poussée ;
- la figure 6 est une vue de principe illustrant de façon très schématique, en vue de dessus, une première cinématique possible des portes d'inversion de poussée ;
- la figure 7 est une vue comparable à la figure 6 illustrant une deuxième cinématique possible des portes d'inversion de poussée ; et
- la figure 8 est une vue comparable aux figures 6 et 7 illustrant une troisième cinématique possible des portes d'inversion de poussée.

### Exposé détaillé d'une forme de réalisation préférentielle

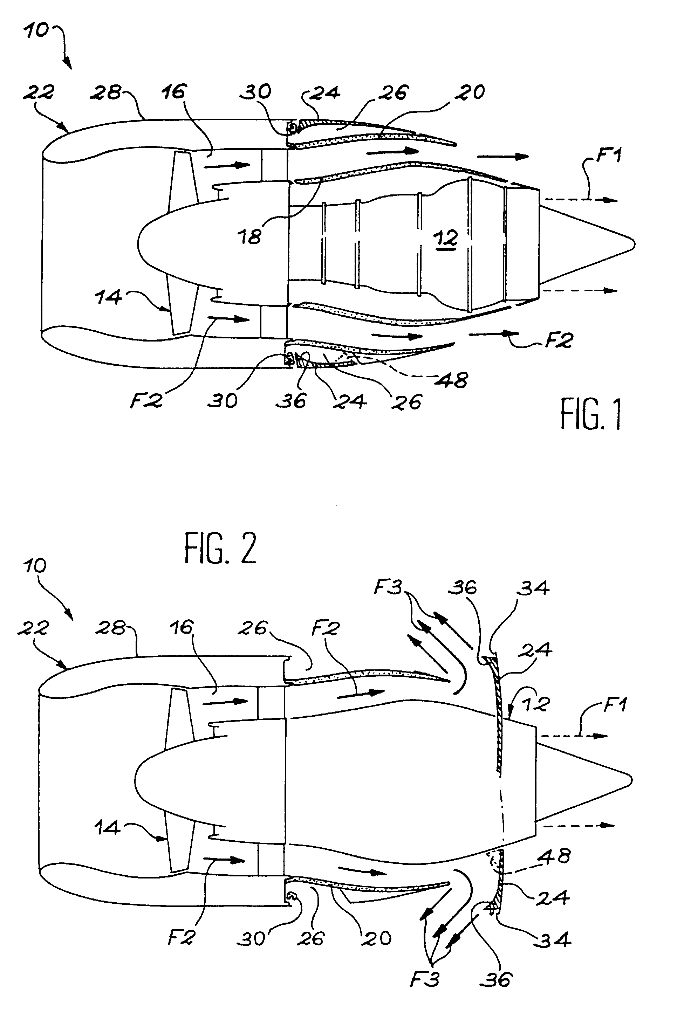

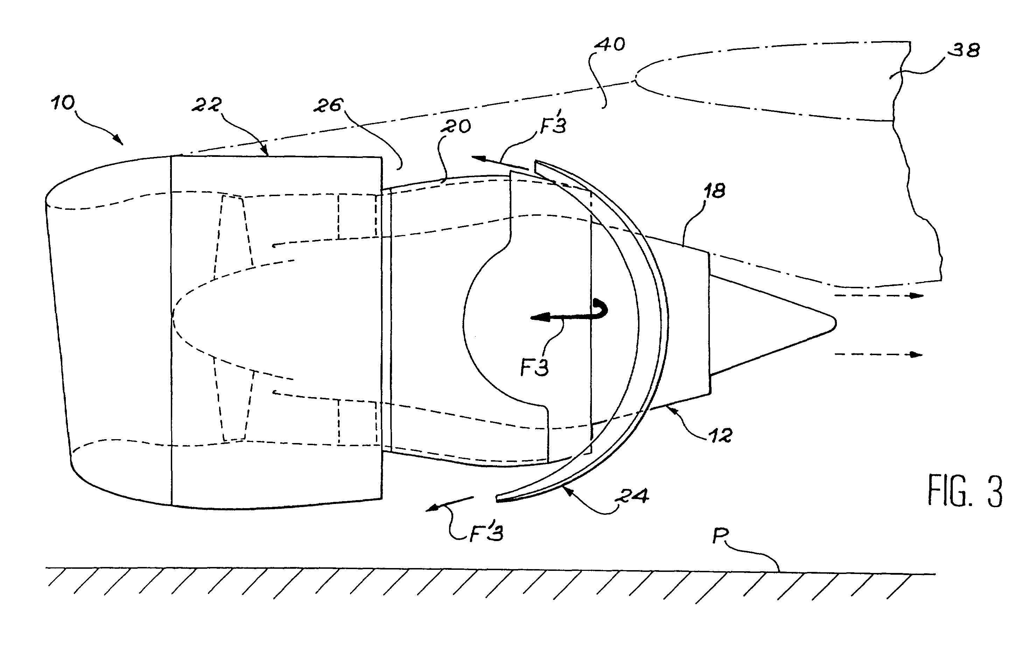

On a représenté de façon très schématique sur les figures 1 et 2 un turboréacteur à double flux conforme à l'invention. Plus précisément, le turboréacteur illustré sur ces figures est un turboréacteur à flux séparés ou à nacelle courte.

Les caractéristiques générales d'un tel réacteur sont bien connues et ne font pas partie de l'invention. Par conséquent, on rappellera simplement ici brièvement les caractéristiques nécessaires à une bonne compréhension de l'invention.

Le turboréacteur, désigné de façon générale par la référence 10, comprend un moteur central 12, d'axe longitudinal, dont l'extrémité avant est située sur la gauche en considérant les figures. En partant de cette extrémité d'entrée, le moteur central 12 comporte de façon connue un compresseur, une turbine haute pression entraînant le compresseur, une chambre de combustion et une turbine basse pression. La turbine basse pression entraîne une soufflante 14 placée à l'avant du moteur central 12, à l'entrée d'un canal annulaire 16, appelé aussi "canal de soufflante", délimité entre l'enveloppe extérieure 18 du moteur central 12 et l'enveloppe intérieure 20 d'une nacelle 22 placée coaxialement autour du moteur central 12.

Sur les figures 1 et 2, les flèches F1 et F2 désignent respectivement le flux primaire chaud sortant du moteur central 12 et le flux secondaire froid produit par la soufflante 14 dans le canal de soufflante 16.

Dans la forme de réalisation représentée, qui concerne un turboréacteur à flux séparés ou à nacelle courte, le moteur central 12 fait saillie vers l'arrière au-delà de l'extrémité arrière de la nacelle 22.

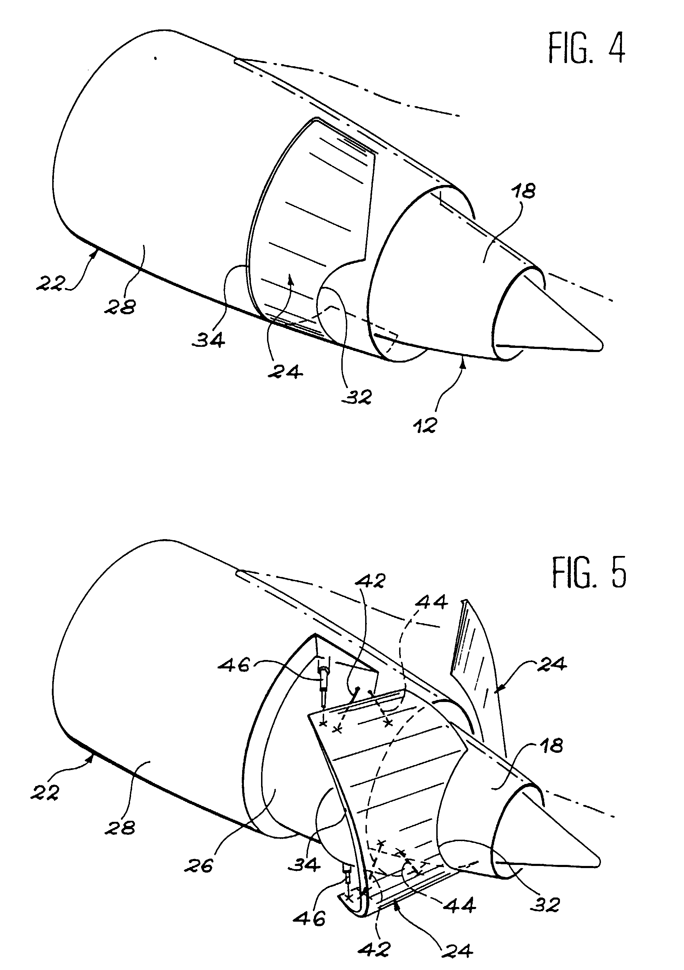

Conformément à l'invention, un tel turboréacteur à double flux comprend deux portes 24 d'inversion de poussée qui sont reçues en totalité dans des logements 26 formés dans l'enveloppe extérieure 28 de la nacelle 22, lorsque ces portes 24 occupent leur position inactive illustrée notamment sur les figures 1 et 4. Plus précisément, les logements 26 dans lesquels sont reçues les portes 24 sont situés en totalité à l'extérieur de l'enveloppe intérieure 20 de la nacelle 22 et les portes 24 assurent la continuité de l'enveloppe extérieure 28 de la nacelle, dans leur position inactive.

Comme on l'a illustré schématiquement sur la figure 1, cette disposition des portes 24 d'inversion de poussée, dans leur position inactive, permet de réaliser en totalité l'enveloppe intérieure 20 de la nacelle 22 en un matériau présentant de bonnes caractéristiques d'isolation acoustique. De plus, aucune discontinuité n'est introduite dans le canal de soufflante 16, de sorte que l'écoulement du flux secondaire F2 produit par la soufflante 14 n'est pas perturbé.

En outre, étant donné que les portes 24 d'inversion de poussée ne sont soumises à aucun des flux primaire F1 et secondaire F2 délivrés par le réacteur, les surpressions induites par ces flux ne s'appliquent pas sur les portes et leur ouverture accidentelle en vol est pratiquement impossible. Le maintien des portes 24 dans leur position inactive illustrée sur les figures 1 et 4 peut donc être assuré sans difficulté par des verrous 30 de conception classique.

Comme l'illustrent notamment les figures 2, 3 et 5, lorsque les deux portes 24 sont amenées dans leur position active, dans laquelle un effet d'inversion de poussée du réacteur est obtenu, elles sont placées à l'arrière de l'extrémité arrière de la nacelle 22, à une distance suffisante pour que le flux secondaire puisse s'écouler aisément entre les portes et l'arrière de la nacelle. De plus, les portes 24 sont alors orientées selon une direction sensiblement radiale par rapport à l'axe longitudinal du moteur central 12, dans le prolongement du canal de soufflante 16 et vers l'extérieur, au-delà de ce canal. Plus précisément, les portes 24 sont de préférence inclinées vers l'avant, en allant vers l'extérieur (figure 5).

Comme l'illustre mieux la figure 5, chacune des portes 24 comporte un bord aval 32 (les portes étant en position inactive) en arc de cercle, qui épouse sensiblement l'enveloppe extérieure 18 du moteur central 12, dans la position active de cette porte. Lorsque les portes 24 occupent leur position inactive (figure 4) ce bord aval 32 en arc de cercle est orienté vers l'arrière du turboréacteur et donne à la découpe de la porte 24 une forme complexe.

Le bord amont 34 de chacune des portes 24, dans la position active de cette porte, vient se placer à l'avant du logement 26, dans un plan perpendiculaire à l'axe longitudinal du moteur central 12, lorsque les portes occupent leur position inactive.

Les logements 26 dans lesquels s'escamotent les portes 24 d'inversion de poussée dans leur position inactive sont disposés sur les côtés du turboréacteur, en des emplacements symétriques par rapport à un plan vertical médian de ce dernier. Ces logements 26 ainsi que les portes 24 qu'ils reçoivent s'étendent sur la majeure partie de la demi-circonférence correspondante de la nacelle 22. Le déplacement des portes 24 entre leur position inactive illustrée sur les figures 1 et 4 et leur position active illustrée sur les figures 2, 3 et 5 s'effectue donc selon une direction sensiblement horizontale.

Il est à noter que sur les figures 1 et 2, les portes 24 ainsi que leurs logements 26 ont été représentés en coupe selon un plan horizontal médian du turboréacteur en partie basse et en coupe selon un plan passant par le point de plus grande largeur des portes en partie haute.

Comme on l'a représenté en 36 sur les figures 1 et 2, chacune des portes 24 comporte, sur son bord amont 34 (figures 4 et 5) un déflecteur extérieur 36 qui est placé à l'intérieur du logement 26 correspondant lorsque la porte occupe sa position inactive. Au contraire, lorsque les portes 24 occupent leur position active comme l'illustre la figure 2, les déflecteurs 36 sont orientés vers l'avant du turboréacteur et infléchissent dans cette direction le flux secondaire expulsé à l'extérieur de la nacelle 22 par les portes 24. Cet effet, illustré par les flèches F3 sur la figure 2, assure l'inversion de poussée désirée sur le turboréacteur 10.

Comme on l'a illustré en traits discontinus sur les parties basses des figures 1 et 2, chacune des portes 24 comprend avantageusement sur son bord aval 32 en arc de cercle (figures 4 et 5) un déflecteur intérieur 48 qui est reçu dans le logement 26 correspondant lorsque la porte occupe sa position inactive. Lorsque la porte 24 occupe sa position active illustrée sur la figure 2, ce déflecteur intérieur 48 est orienté vers l'avant du réacteur, à proximité immédiate de l'enveloppe extérieure 18 du moteur central 12. Ce déflecteur intérieur 48 améliore l'écoulement du flux secondaire F2 vers l'extérieur lorsqu'il heurte les portes 24, en réduisant très sensiblement les discontinuités qui existent à cet endroit entre l'enveloppe extérieure 18 du moteur central 12 et les portes 24.

Il est à noter que la présence des déflecteurs 36 et 48 sur les portes 24 est autorisée par le fait que les portes 24 sont normalement reçues, dans leur position inactive, dans des logements 26 relativement profonds de la nacelle 22. Cette caractéristique est due au fait que les logements 26 sont formés dans une partie épaisse de la nacelle 22, situés autour de la turbine haute pression du moteur central 12.

En raison de la courbure en arc de cercle des portes 24 imposée par le fait que ces portes complètent l'enveloppe extérieure 28 de la nacelle 22 dans leur position inactive, l'orientation vers l'avant du flux d'air secondaire venant heurter les portes 24 est d'autant plus importante qu'on se rapproche des extrémités haute et basse de ces portes, comme l'illustrent les flèches F'3 sur la figure 3. Cette caractéristique permet de maîtriser au mieux l'interaction du flux secondaire inversé avec la piste P sur laquelle roule l'avion.

On voit aussi sur la figure 3 que, lorsque les portes 24 sont dans leur position active, elles se trouvent encore à l'avant de la voilure 38 à laquelle le réacteur 10 est généralement suspendu par un mât 40. Cette caractéristique permet d'éviter tout risque de perte d'efficacité des freins mécaniques de l'avion, en supprimant pratiquement tout risque de décollement de ce dernier alors qu'il roule sur la piste.

La figure 3 montre également que l'agencement proposé conformément à l'invention pour les portes 24 permet à ces portes de remplir pleinement leur fonction d'inversion de poussée sans qu'il soit nécessaire d'en réduire les dimensions pour tenir compte de la garde au sol de l'avion, c'est-à-dire d'un éventuel risque d'interférence des portes avec le sol lorsque les inverseurs de poussée sont actionnés.

Le déplacement des portes 24 entre leur position inactive des figures 1 et 4 et leur position active des figures 2, 3 et 5 est assuré par des moyens de commande de déplacement qui peuvent prendre différentes formes aisément imaginables par un mécanicien sans sortir du cadre de l'invention.

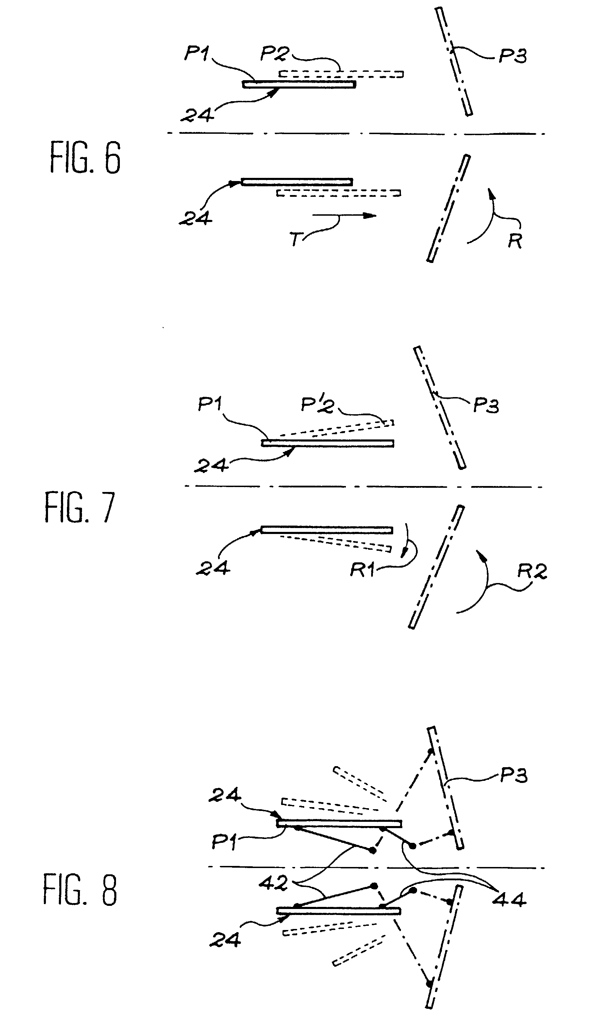

A titre d'illustration nullement limitative, trois formes de réalisation de ces moyens de commande de déplacement vont à présent être indiqués, par l'intermédiaire de la cinématique qui leur correspond, en se référant successivement aux figures 6 à 8.

Comme on l'a illustré de façon très schématique sur la figure 6, une première cinématique pour faire passer les portes 24 de leur position inactive Pl à leur position active P3 consiste à imposer tout d'abord à ces portes un mouvement de translation (flèche T) vers l'arrière du turboréacteur (position P2), puis un mouvement de pivotement (flèche R) de ces portes vers l'extérieur selon un angle voisin de 80°. Après ouverture des verrous 30 illustrés schématiquement sur les figures 1 et 2, une telle cinématique peut être commandée, pour chaque porte, au moyen de deux vérins (non représentés) interposés entre les extrémités haute et basse de la porte et la nacelle. Le mouvement proprement dit peut être déterminé par des mécanismes comprenant des coulisseaux, des butées et des axes de pivotement.

Comme on l'a illustré de façon très schématique sur la figure 7, une deuxième cinématique possible pour faire passer les portes 24 de leur position inactive P1 dans leur position active P3 comprend un premier mouvement de rotation (flèche R1) des portes autour de leurs bords amonts 34, alors orientés vers l'avant, permettant d'écarter les bords avals 32 des portes de la nacelle (position P'2), suivi d'un deuxième mouvement de rotation (flèche R2), d'environ 80° des portes vers l'arrière. Ce deuxième mouvement de rotation est comparable à celui qui termine la première cinématique décrite précédemment à se référant à la figure 6. Ici encore, la commande peut être assurée au moyen de deux vérins pour chacune des portes 24, ces vérins étant interposés entre les extrémités haute et basse de chacune des portes et la nacelle 22. Les mouvements de pivotement combinés sont assurés par des axes de pivotement associés à des butées mécaniques.

La troisième cinématique illustrée schématiquement sur la figure 8 et, pour l'une des portes, sur la figure 5, correspond à un mouvement complexe des portes, permettant de faire passer celles-ci en continu de leur position inactive P1 dans leur position active P2 et inversement. Cette cinématique est assurée par deux paires de bielles 42 et 44 de longueurs différentes, dont les extrémités pivotent respectivement en haut et en bas de chacune des portes 24 et sur la nacelle 22. Du fait que les bielles 42 placées à l'avant sont plus longues que les bielles 44 placées à l'arrière, l'écartement des portes 24, commandé par des vérins 46 agencés de la même manière que dans les formes de réalisation illustrées sur les figures 6 et 7, a pour effet d'amener progressivement les portes dans leur position active, sans interférence avec aucune autre pièce de la structure du réacteur.

Bien entendu, l'invention n'est pas limitée à la forme de réalisation qui vient d'être décrite à titre d'exemple mais en couvre toutes les variantes. En particulier, si l'invention est spécialement avantageuse dans le cas d'un turboréacteur à flux séparés ou à nacelle courte, elle peut aussi s'appliquer à un turboréacteur à flux mélangés ou à nacelle longue. Dans ce cas, la position inactive des portes est analogue à celle qui a été décrite, alors que, dans leur position active, les portes viennent se placer totalement à l'arrière du turboréacteur, à la manière d'un parachute, pour dévier à la fois le flux primaire et le flux secondaire du réacteur.

## Revendications

1. Turboréacteur à double flux, comprenant :
- un moteur central (12), d'axe longitudinal donné, comportant une enveloppe extérieure (18) ;
- une nacelle (22) placée coaxialement autour du moteur et comportant une enveloppe intérieure (20) et une enveloppe extérieure (28) ;
- une soufflante (14) entraînée par le moteur et montée dans un canal annulaire (16) formé entre l'enveloppe extérieure du moteur et l'enveloppe intérieure de la nacelle ;
- au moins deux portes (24) d'inversion de poussée, aptes à occuper une position inactive, dans laquelle les portes sont escamotées dans la nacelle (22) et une position active, dans laquelle les portes infléchissent vers l'extérieur de la nacelle et vers l'avant au moins une partie d'un flux d'air circulant dans le canal annulaire (16); et
- des moyens de commande de déplacement des portes (24) entre leur position inactive et leur position active ;
caractérisé par le fait que :
- dans leur position inactive, les portes (24) sont reçues dans des logements (26) formés sur l'enveloppe extérieure (28) de la nacelle et situés en totalité à l'extérieur de l'enveloppe intérieure (20) de la nacelle ; et
- dans leur position active, les portes (24) sont placées au-delà de l'extrémité arrière de la nacelle (22).

2. Turboréacteur selon la revendication 1, caractérisé par le fait que chacune des portes (24) comprend dans le bord aval, les portes étant en position inactive, une partie (32) en arc de cercle, qui épouse sensiblement l'enveloppe extérieure (18) du moteur, dans la position active de la porte.

3. Turboréacteur selon la revendication 2, caractérisé par le fait que chacune des portes (24) comprend un déflecteur intérieur (48) placé dans le logement (26) quand la porte est en position inactive, ce déflecteur intérieur étant situé sur le bord (32) en arc de cercle, et orienté vers l'avant dans la position active de la porte.

4. Turboréacteur selon l'une quelconque des revendications précédentes, caractérisé par le fait que chacune des portes (24) comprend un déflecteur extérieur (36) placé dans le logement (26) quand la porte est en position inactive, ce déflecteur extérieur étant situé sur le bord amont (34) de la porte et orienté vers l'avant dans la position active de la porte (24).

5. Turboréacteur selon l'une quelconque des revendications précédentes, caractérisé par le fait qu'il comprend deux portes (24) d'inversion de poussée reçues dans deux logements (26) situés sur les côtés du turboréacteur et s'étendant sur la majeure partie de la demi-circonférence de la nacelle (22), le déplacement des portes entre leur position inactive et leur position active s'effectuant selon une direction sensiblement horizontale pendant l'atterrissage.

6. Turboréacteur selon l'une quelconque des revendications précédentes, caractérisé par le fait que les moyens de commande de déplacement des portes (24) comprennent des moyens de liaison pivotante reliant chaque porte à la nacelle (22), et au moins un vérin d'actionnement interposé entre la porte et la nacelle.

7. Turboréacteur selon l'une quelconque des revendications 1 à 5, caractérisé par le fait que les moyens de commande de déplacement des portes (24) comprennent des moyens de liaison en translation et en pivotement reliant chaque porte à la nacelle (22), et au moins un vérin d'actionnement interposé entre la porte et la nacelle.

8. Turboréacteur selon l'une quelconque des revendications 1 à 5, caractérisé par le fait que les moyens de commande de déplacement des portes (24) comprennent des moyens de liaison à bielles articulées (42, 44) reliant chaque porte à la nacelle (22), et au moins un vérin d'actionnement (46) interposé entre la porte et la nacelle.

## Claims

1. Turbofan, comprising:
- a core engine (12), of given longitudinal axis, including an outer enclosure (18);
- a nacelle (22) placed coaxially around the engine and including an inner enclosure (20) and an outer enclosure (28);
- a fan (14) driven by the engine and assembled in an annular channel (16) formed between the outer enclosure of the engine and the inner enclosure of the nacelle;
- at least two thrust reversal doors (24), capable of occupying an inactive position, in which the doors are retracted in the nacelle (22), and an active position, in which the doors inflect at least part of the air flow circulating in the annular channel (16) towards the exterior of the nacelle and forwards; and
- means of controlling the movement of the doors (24) between their inactive and their active positions;
characterized in that:
- in their inactive position, the doors (24) are housed in casings (26) which are formed on the outer enclosure (28) of the nacelle and which are located in their entirety outside the inner enclosure (20) of the nacelle; and
- in their active position, the doors (24) are placed beyond the rear end of the nacelle (22).

2. Turbofan according to claim 1, characterized in that each of the doors (24) comprises in the downstream edge (32) the doors being in the inactive position, a circular arc-shaped part which approximately hugs the outer enclosure (18) of the engine, in the active position of the door.

3. Turbofan according to claim 2, characterized in that each of the doors (24) comprises an inner deflector (48) placed in the casing (26) when the door is in the inactive position, this inner deflector being located on the edge (32) in a semicircular arc, and oriented towards the front in the active position of the door.

4. Turbofan according to any one of the preceding claims, characterized in that each of the doors (24) comprises an outer deflector (36) placed in the casing (26) when the door is in the inactive position, this outer deflector being located on the upstream edge (34) of the door, and oriented towards the front in the active position of the door (24).

5. Turbofan according to any one of the preceding claims, characterized in that two thrust reversal doors (24) are housed in casings (26) located on the sides of the turbofan and stretch over most of the semi-circumference of the nacelle (22), the movement of the doors between their inactive position and their active position taking place on an approximately horizontal plane during landing.

6. Turbofan according to any one of the preceding claims, characterized in that the means of controlling the movement of the doors (24) comprise means of swivel liaison linking each door to the nacelle (22) and at least one actuator inserted between the door and the nacelle.

7. Turbofan according to any one of the claims 1 to 5, characterized in that the means of controlling the movement of the doors (24) comprise translation and swivel means of liaison linking each door to the nacelle (22), and at least one actuator inserted between the door and the nacelle.

8. Turbofan according to any one of the claims 1 to 5, characterized in that the means of controlling the movement of the doors (24) comprise means of liaison with articulated rods (42, 44) linking each door to the nacelle, and at least one actuator (46) inserted between the door and the nacelle.

## Patentansprüche

1. Zweikreistriebwerk, umfassend:
- einen zentralen Motor (12) mit gegebener Längsachse und einer Außenverkleidung (18);
- eine Gondel (22), koaxial um den Motor herum angebracht, mit einer Innenverkleidung (20) und einer Außenverkleidung (28);
- einen Verdichter (14), angetrieben durch den Motor und in einen ringförmigen Kanal (16) montiert, der durch die Außenverkleidung des Motors und die Innenverkleidung der Gondel gebildet wird;
- wenigstens zwei Schubumkehrklappen (24), die eine inaktive Stellung einnehmen können, in der die Klappen in der Gondel (22) versenkt sind, und eine aktive Stellung, in der die Klappen wenigstens einen Teil des durch den ringförmigen Kanal (16) fließenden Luftstroms in Bezug auf die Gondel nach außen und nach vorn umlenken, und
- Steuereinrichtungen der Bewegung der Klappen (24) zwischen ihrer inaktiven und ihrer aktiven Stellung;
**dadurch gekennzeichnet**,
- dass die Klappen (24) in ihrer inaktiven Stellung durch Sitze (26) aufgenommen werden, die in der Außenverkleidung (28) der Gondel ausgebildet sind und sich zur Gänze außerhalb der Innenverkleidung (20) der Gondel befinden; und
- dass sich die Klappen (24) in ihrer aktiven Stellung jenseits des hinteren Endes der Gondel (22) befinden.

2. Triebwerk nach Anspruch 1, dadurch gekennzeichnet, dass jede der Klappen (24) in dem in der inaktiven Stellung hinteren Rand einen kreisbogenförmigen Teil (32) umfasst, der sich in der aktiven Stellung der Klappe im wesentlichen an die Außerverkleidung (18) des Motors anpasst.

3. Triebwerk nach Anspruch 2, dadurch gekennzeichnet, dass jede der Klappen (24) einen inneren Ablenker (48) umfasst, der sich in dem Sitz (26) befindet, wenn die Klappe in der inaktiven Stellung ist, wobei dieser innere Ablenker sich auf dem kreisbogenförmigen Rand (32) befindet und in der aktiven Stellung der Klappe nach vorn gerichtet ist.

4. Triebwerk nach einem der vorangehenden Ansprüche, dadurch gekennzeichnet, dass jede der Klappen (24) einen äußeren Ablenker (36) umfasst, der sich in dem Sitz (26) befindet, wenn die Klappe in der inaktiven Stellung ist, wobei dieser äußere Ablenker sich auf dem vorderen Rand (34) der Klappe befindet und in der aktiven Stellung der Klappe nach vorn gerichtet ist.

5. Triebwerk nach einem der vorangehenden Ansprüche, dadurch gekennzeichnet, dass es zwei Schubumkehrklappen (24) gibt, die durch zwei Sitze (26) aufgenommen werden, die sich auf den Seiten des Triebwerks befinden und sich über den größten Teil des Halbumfangs der Gondel (22) erstrecken, wobei die Bewegung der Klappen zwischen ihrer inaktiven Stellung und ihrer aktiven Stellung während der Landung in einer im wesentlichen horizontalen Richtung erfolgt.

6. Triebwerk nach einem der vorangehenden Ansprüche, dadurch gekennzeichnet, dass die Steuerungseinrichtungen der Bewegung der Klappen (24) schwenkbare Verbindungseinrichtungen umfassen, die jede Klappe mit der Gondel (22) verbinden, und wenigstens einen Betätigungszylinder, eingebaut zwischen der Klappe und der Gondel.

7. Triebwerk nach einem der Ansprüche 1 bis 5, dadurch gekennzeichnet, dass die Steuerungseinrichtungen der Bewegung der Klappen (24) Parallelverschiebungs- und Schwenkeinrichtungen umfassen, die jede Klappe mit der Gondel (22) verbinden, und wenigstens einen Betätigungszylinder, eingebaut zwischen der Klappe und der Gondel.

8. Triebwerk nach einem der Ansprüche 1 bis 5, dadurch gekennzeichnet, dass die Steuerungseinrichtungen der Bewegung der Klappen (24) Verbindungseinrichtungen mit Anlenkstangen (42, 44) umfassen, die jede Klappe mit der Gondel (22) verbinden, und wenigstens einen Betätigungszylinder (46), eingebaut zwischen der Klappe und der Gondel.
